# EUROPÄISCHE PATENTSCHRIFT

(11) **EP 1 710 110 B1**
(45) Veröffentlichungstag und Bekanntmachung des Hinweises auf die Patenterteilung: **16.05.2012**
(21) Anmeldenummer: 06007002.6
(22) Anmeldetag: 31.03.2006
(51) Int. Cl.: B60J 7/20

(54) **Verriegelungsmechanismus für einen Verdeckstoffhaltebügel sowie Verdecksystem**
Locking mechanism for mounting bracket supporting soft top material and folding top
Mecanisme de verrouillage pour support de fixation de matériau pour capote et toit escamotable

(30) Priorität: 06.04.2005 DE 102005015759
(43) Veröffentlichungstag der Anmeldung: 11.10.2006
(73) Patentinhaber: Wilhelm Karmann GmbH, 49084 Osnabrück (DE)
(72) Erfinder: Russke, Klaus, 49143 Bissendorf (DE)
(74) Vertreter: Kronthaler, Schmidt & Coll.

(56) Entgegenhaltungen:
- WO-A-2005/007428
- DE-A1- 19 738 801
- DE-A1- 19 935 732
- DE-U1- 9 311 798
- US-A- 5 301 987
- US-B1- 6 290 281

## Beschreibung

Die Erfindung betrifft einen Verriegelungsmechanismus für einen Verdeckstoffhaltebügel, wie er bei einem Stoffcabrioletverdeck angewendet wird. Der hintere Abschluss des Stoffverdecks wird durch einen solchen Stoffspannbügel gebildet. Die Vorrichtung bezieht sich insbesondere auf ein Verdeck, das bis zum Ende (Heck) des Kraftfahrzeugs reicht. Somit befindet sich unterhalb des Spannbügels eine im Wesentlichen senkrecht ausgerichtete Heckklappe an der Rückseite des Fahrzeugs.

Der Verdeckstoffhaltebügel dient dazu, den heckseitigen Abschluss des Stoffverdecks sowohl dann, wenn das Verdeck geöffnet ist, als auch dann, wenn das Verdeck geschlossen ist, sicher zu halten. Daher ist es erforderlich, dass er zuverlässig mit der Fahrzeugkarosserie verbunden ist, damit sich das Verdeck nicht unbeabsichtigt vom Fahrzeug löst.

Unterhalb des Spannbügels ist die Heckklappe als Zugang zum Kofferraum des Fahrzeugs vorgesehen. Die Heckklappe kann entweder nach oben oder nach unten öffnen. Wenn Zugang zum Kofferraum gewünscht ist, bildet der Verdeckstoffhaltebügel somit die obere Grenze für die Beladeöffnung des Kofferraums des Fahrzeugs. Daher kann es sein, dass große, sperrige Gegenstände nur schwer oder nicht in den Kofferraum des Fahrzeugs eingeladen werden können, selbst wenn dieser ein ausreichendes Volumen aufweist, da die Heckklappe und mit ihr der obere Abschluss des Verdeckstoffhaltebügels eine Art Nadelöhr bilden.

Daher wurde bereits vorgeschlagen, für einen nach unten zu öffnenden Heckdeckel bei geöffnetem Heckdeckel den Verdeckstoffhaltebügel zumindest bereichsweise anzuheben. Damit wird die Beladeöffnung vergrößert und auch größere und sperrigere Gegenstände können in den Kofferraum gestellt werden. Den bekannten Systemen zum Vergrößern der Beladeöffnung, wenn ein Verdeckstoffhaltebügel vorgesehen ist, liegt die Idee zugrunde, den Verdeckstoffhaltebügel bereichsweise hochzuklappen, indem dieser zumindest zweiteilig gestaltet ist, so dass er in diesem Bereich aus seiner Verrastung mit der Fahrzeugkarosserie getrennt wird. Es werden anschließend manuell Streben, die den Verdeckstoffhaltebügel in der aufgeklappten Stellung halten, zwischen Fahrzeugkarosserie und Haltebügel positioniert und verrastet.

Die US 6,290,281 B1 beschreibt einen elektrischen Verriegelungsmechanismus für ein Fahrzeug mit einem zu öffnenden Verdeck, insbesondere dessen Verdeckstoffhaltebügel. Ein am Verdeckstoffhaltebügel angebrachtes Hebelelement gelangt in Eingriff mit einer elektrisch betriebenen drehbaren Raste und wird durch Betreiben des Elektromotors in die Verriegelungsposition gezogen.

Es ist Aufgabe der Erfindung, einen einfach zu bedienenden und zuverlässigen Verriegelungsmechanismus für einen zwischen einer Offen- und einer Schließstellung bewegbaren Verdeckstoffhaltebügel zu schaffen. Außerdem sollen ein Verdecksystem mit einem Verdeckstoffhaltebügel sowie ein Stoffverdeck, die bedienungssicher sind, vorgesehen werden.

Diese Aufgabe wird mit einem Verriegelungsmechanismus mit den Merkmalen des Anspruchs 1 gelöst. Bevorzugte Ausgestaltungen sind in den abhängigen Ansprüchen angegeben.

So enthält ein Verriegelungsmechanismus für einen zwischen einer Offen- und einer Schließstellung bewegbaren Verdeckstoffhaltebügel ein karosseriefest angebrachtes Gehäuse mit einer Führungskulisse für ein am Verdeckstoffhaltebügel gelagertes Hebelelement. Das Hebelelement gleitet zwischen der Offen- und der Schließstellung des Verdeckstoffhaltebügels entlang der Führungskulisse und ist in der Schließstellung mittels einer Verriegelungseinrichtung arretierbar.

Der Erfindung liegt der Gedanke zugrunde, dass das Hebelelement auf seinem gesamten Bewegungsweg zwischen der Offen-und der Schließstellung durch die Führungskulisse geführt wird und somit auch beim Schließen sofort in Kontakt mit der Führungskulisse ist und leicht einrasten kann. Es ist nicht nötig, zusätzliche Bauteile zu schwenken, während der Verdeckstoffhaltebügel in der Offenstellung gehalten wird, z. B. um sie als Aufhalter für den Verdeckstoffhaltebügel zu positionieren, da das Hebelelement gleichzeitig als Aufhalter für den Verdeckstoffhaltebügel dient und automatisch seine Aufhalteposition erreicht.

Das Hebelelement wird auf seinem gesamten Bewegungsweg gegen die Führungskulisse durch eine Vorspanneinrichtung, z. B. eine Schenkelfeder, gedrückt, so dass das Hebelelement in jeder Position zwischen der Offen- und der Schließstellung des Verdeckstoffhaltebügels zuverlässig in der Kulisse geführt wird und somit eine definierte Bewegung möglich wird. Außerdem wird, da das Hebelelement stets im Gehäuse, in dem auch die Kulisse liegt, bleibt, das Verrasten erleichtert.

Vorteilhafterweise ist auch in der Offenstellung eine Raste für das Hebelelement vorgesehen, so dass das Hebelelement als Aufstellhebel sicher positioniert ist und aus der Offenposition nicht unbeabsichtigt bewegt wird. Vorzugsweise ist das Vorspannelement so positioniert, dass es den Hebel in die Verrastung in der Aufstell- und Aufhalteposition vorbelastet, so dass es das Hebelelement am Ende seines Bewegungswegs, der Offenstellung des Verdeckstoffhaltebügels entspricht, automatisch verrastet. Beispielsweise ist diese Raststellung in der Offenposition durch eine Aufnahmenut am oberen Bereich der Führungskulisse gebildet, in die das untere Ende des Hebels eingedrückt wird. In diesem Fall muss zum Schließen des Verdeckstoffhaltebügels der Hebel aus dieser Aufnahmenut gedrückt werden und fällt dann entlang der Führungskulisse, beispielsweise durch die Schwerkraftwirkung, in die verrastbare Schließstellung.

Die Verriegelung in der Schließstellung wird durch einen Verriegelungszapfen am Hebelement, der mit einem Verschlusshebel in Wechselwirkung tritt, gebildet. Der Verschlusshebel weist dazu eine Aufnahmenut für den Verriegelungszapfen auf, die so gestaltet ist, dass sich bei Schließstellung des Verschlusshebels der Verriegelungszapfen und damit das Hebelelement nicht mehr bewegen kann. Der Verschlusshebel weist ferner vorzugsweise einen Hebelgriff auf, mit dem die Verriegelung gelöst wird bzw. hergestellt wird. Vorzugsweise kann zusätzlich die Arretierstellung durch eine Federvorbelastung gesichert sein.

Der Verschlusshebel ist nach einer bevorzugten Ausführungsform weiterhin so gestaltet, dass der Hebelgriff in der Offenstellung eine Position einnimmt, die beispielsweise ein Schließen des Heckdeckels des Fahrzeugs verhindert. Dadurch kann vermieden werden, dass unbeabsichtigterweise der Heckdeckel geschlossen wird, ohne dass der Verdeckstoffhaltebügel wieder sicher verrastet ist.

Vorzugsweise ist ferner der Verdeckstoffhaltebügel aus einem vorderen Stoffhaltebügel und einem hinteren Stoffhaltebügel gebildet. Der vordere Stoffhaltebügel und der hintere Stoffhaltebügel sind relativ zueinander verschwenkbar. Beispielsweise ist der hintere Stoffhaltebügel in der Draufsicht im Wesentlichen U-förmig gestaltet. Der vordere Stoffhaltebügel weist seinerseits zwei Teileinheiten, eine rechte und eine linke Teileinheit, auf, die sich vorzugsweise in der Schließstellung des Verdeckstoffhaltebügels fluchtend an den hinteren Stoffhaltebügel nach vorne fortsetzen. Die Ausdrücke vorne und hinten beziehen sich dabei auf die Vorwärtsfahrt Richtung des Fahrzeugs.

Bei dieser Ausführungsform ist vorteilhafterweise der hintere Stoffhaltebügel mit einem Scharnier mit dem vorderen Stoffhaltebügel verbunden. Auch hier kann zusätzlich beispielsweise eine Vorbelastung in die Offenstellung, die das Öffnen des Verdeckstoffhaltebügels erlaubt und vereinfacht, am Scharnier vorgesehen sein. Der vordere Stoffhaltebügel ist vorzugsweise karosseriefest.

Nachfolgend werden Ausführungsformen der Erfindung beispielhaft anhand der beigefügten Figuren beschrieben, wobei
- Fig. 1: eine perspektivische Ansicht eines Heckbereichs eines Kraftfahrzeugs mit einem erfindungsgemäßen Stoffverdeck ist;
- Fig. 2: eine Seitenansicht des Heckbereichs des Fahrzeugs ist;
- Fig. 3: den Verdeckstoffhaltebügel in perspektivischer Ansicht in der unteren Stellung verriegelt zeigt;
- Fig. 4: den Verdeckstoffhaltebügel in der unteren Stellung entriegelt zeigt;
- Fig. 5: den Verdeckstoffhaltebügel in der oberen Stellung verrastet zeigt;
- Fig. 6: eine schematische Darstellung des Verriegelungsmechanismus für den Verdeckstoffhaltebügel ist, wobei der Bügel in unterer Stellung und verriegelt ist;
- Fig. 7: eine Ansicht des Verriegelungsmechanismus ist, wobei der Verschlusshebel für den Verdeckstoffhaltebügel entriegelt ist;

- Fig. 8: den Verschlussmechanismus für den Verdeckstoffhaltebügel zeigt, wobei der Verdeckstoffhaltebügel in unterer Stellung und entriegelt ist;
- Fig. 9: den Verdeckstoffhaltebügel und den Verriegelungsmechanismus während der Bewegung zeigt; und
- Fig. 10: den Verdeckstoffhaltebügel in oberer Stellung zeigt, wobei das Hebelelement als Aufstellhebel in Ablagestellung ist.

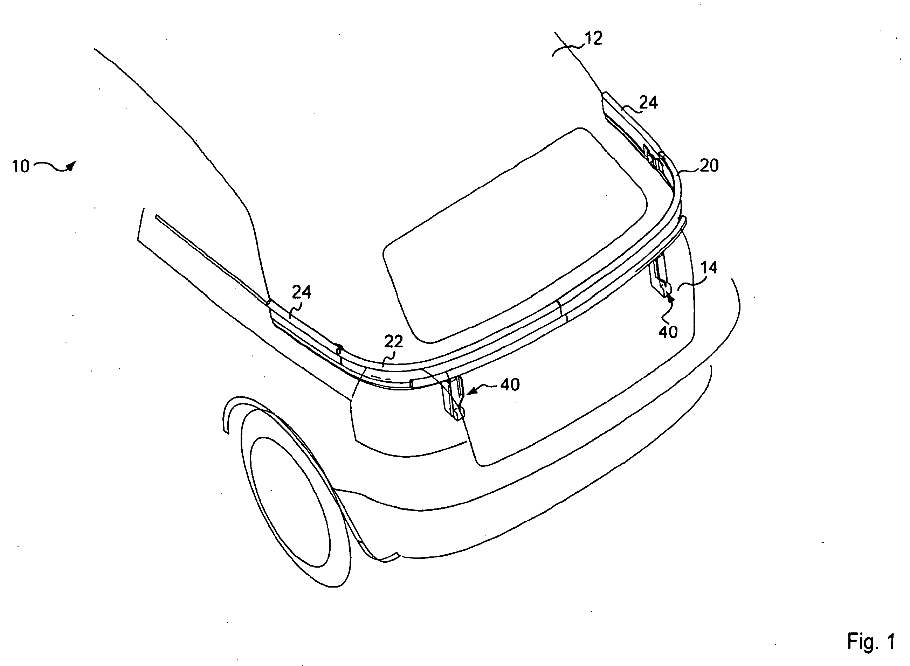

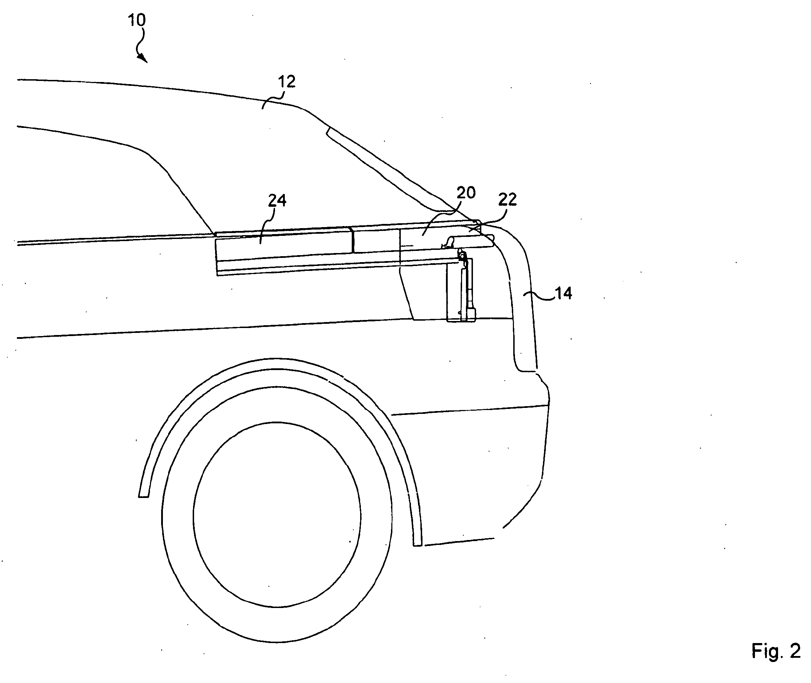

In Figuren 1 und 2 ist in perspektivischer Ansicht bzw. Seitenansicht der Heckbereich 10 eines Fahrzeugs dargestellt, wobei das Fahrzeug als Cabrioletfahrzeug mit Stoffverdeck 12 gestaltet ist. Das Stoffverdeck 12 zieht sich von einem Frontbereich des Fahrzeugs, beispielsweise angrenzend an einen Windschutzscheibenrahmen (nicht dargestellt) bis zum Ende des Fahrzeugs, so dass sich daran nach unten im Wesentlichen senkrecht verlaufend ein Heckdeckel 14 eines Kofferraums anschließt. Der Heckdeckel 14 ist nach oben zu öffnen, d. h. er schwenkt um eine Achse in seinem oder in der Nähe seines oberen Bereichs auf.

Zur Befestigung des Stoffverdecks 12 ist ein Verdeckstoffhaltebügel 20 vorgesehen, der aus einem hinteren Stoffhaltebügel 22 sowie zwei vorderen Stoffhaltebügeln 24 gebildet ist. In der in Figuren 1 und 2 dargestellten geschlossenen Position des Kofferraums und damit der Schließstellung des Verdeckstoffhaltebügels 20 sind der hintere Stoffhaltebügel 22 und die vorderen Stoffhaltebügel zueinander fluchtend und bilden in der Draufsicht im Wesentlichen eine U-Form. Die vorderen Stoffhaltebügel 22 sind karosseriefest.

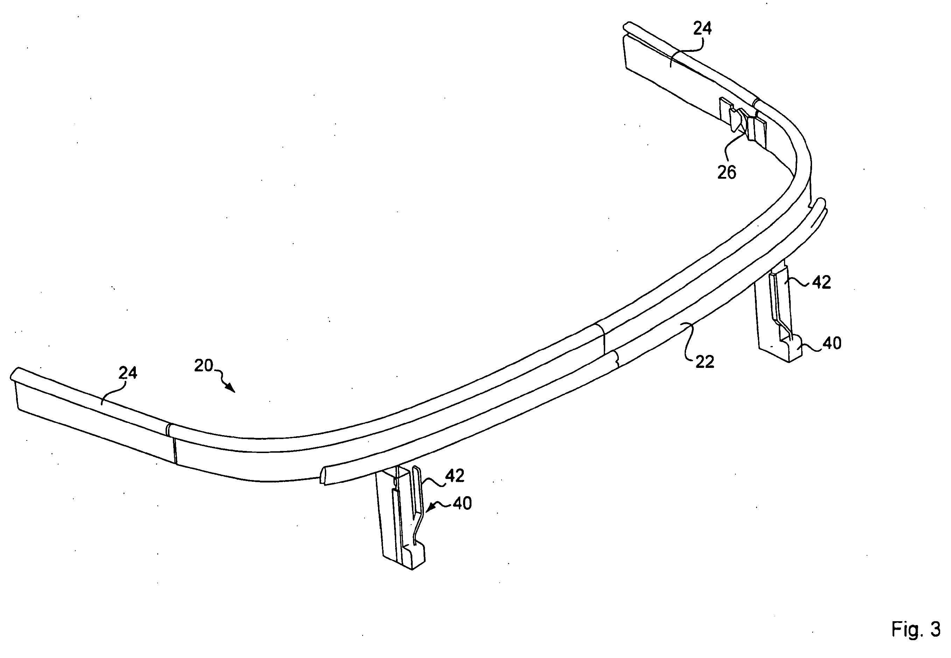

Damit die Zugangsöffnung zum Kofferraum vergrößert werden kann, und insbesondere nicht durch die Position des Verdeckstoffhaltebügels 20, die in Figuren 1 und 2 dargestellt ist, begrenzt ist, ist der Verdeckstoffhaltebügel 20 zwischen einer Offen- und einer Schließstellung bewegbar gestaltet, wobei er sich in der Offenstellung von der Fahrzeugkarosserie trennt. Dazu sind der hintere Stoffhaltebügel 22 sowie die vorderen Stoffhaltebügel 24, wie es in Figuren 3 bis 5 dargestellt ist, durch einen Scharniermechanismus 26 verbunden.

In Fig. 3 ist die Schließstellung des Verdeckstoffhaltebügels 20 gezeigt, in welcher dieser mittels eines Verriegelungsmechanismus 40 zuverlässig in der geschlossenen Position gehalten wird. Von dem Verriegelungsmechanismus 40 sind, wie es in Figuren 1 und 3 bis 5 dargestellt ist, vorzugsweise beidseitig symmetrisch zu einer Fahrzeuglängsebene zwei einander entsprechende Elemente ausgebildet, um eine sicherere Führung und Verriegelung des Verdeckstoffhaltebügels 20 zu ermöglichen.

Der Verriegelungsmechanismus 40, der später im Einzelnen beschrieben wird, weist einen Verschlusshebel 42 auf, der in der in Fig. 3 gezeigten unteren, arretierten Position des Verdeckstoffhaltebügels 20 ebenfalls in der verriegelten Stellung hochgeklappt und am Gehäuse 46 des Verriegelungsmechanismus 40 anliegend ist. Der Verriegelungsmechanismus 40 ist an der Fahrzeugkarosserie befestigt.

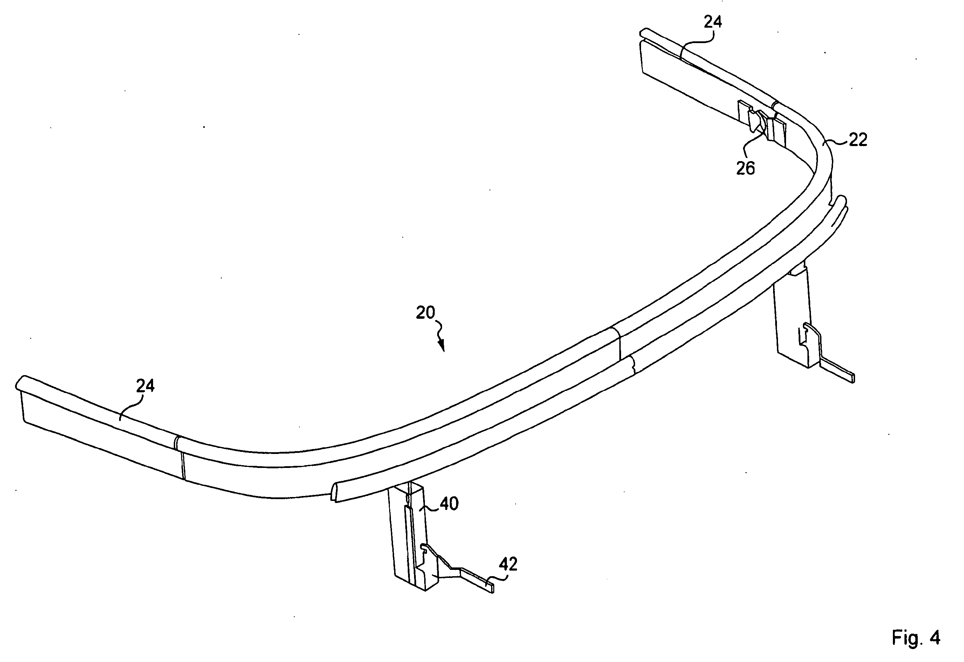

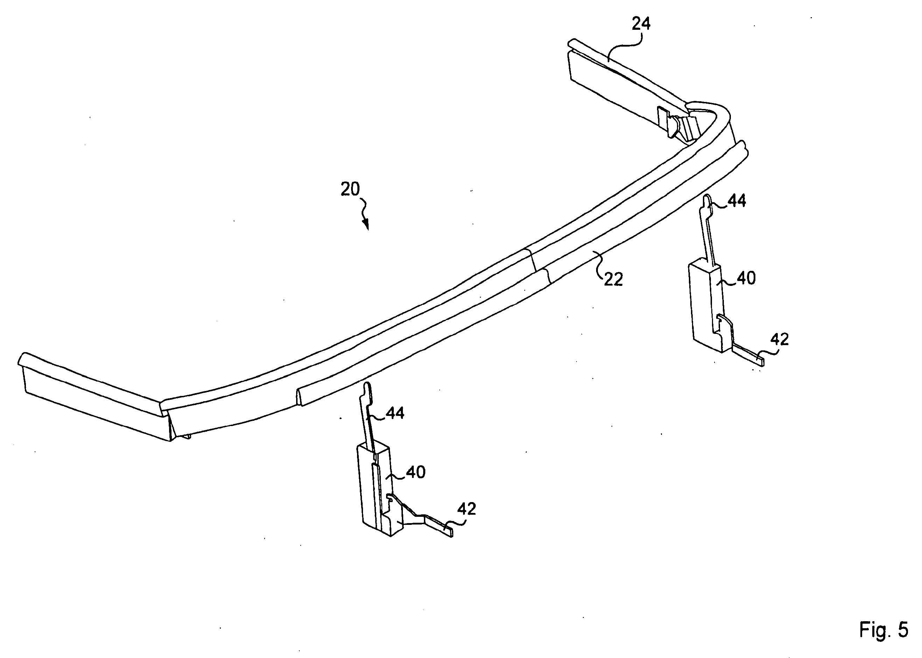

Aus Figuren 4 und 5 gehen die verschiedenen Positionen des Verdeckstoffhaltebügels 20 hervor. Wenn, wie in Fig. 4 gezeigt, der Verschlusshebel 42 des Verriegelungsmechanismus 40 geöffnet wird, stehen die Verschlusshebel 42 zur Rückseite des Fahrzeugs vor und trennen sich durch die Schwenkbewegung aus der Anlage am Gehäuse 46. Dabei ist ihre vorspringende Länge vorzugsweise derart gewählt, dass der in Figuren 1 und 2 dargestellte Heckdeckel 14 nicht mehr geschlossen werden kann, da das Schließen durch die Hebel 42 blockiert wird.

Nach Bedarf kann an den Scharnieren 26 zwischen dem hinteren Stoffhaltebügel 22 und dem vorderen Stoffhaltebügel 24 eine Vorspanneinrichtung vorgesehen sein, die den hinteren Stoffhaltebügel 22 in die geöffnete Position vorbelastet, so dass bei einer Entriegelung des Verschlusshebels 42 der hintere Stoffhaltebügel 22 automatisch angehoben und um seine Schwenkachse nach oben aufgeschwenkt wird.

Diese aufgeschwenkte Position ist in Fig. 5 dargestellt. Wie dort andeutungsweise zu erkennen ist, stehen in dieser Position aus dem Verriegelungsmechanismus 40 Hebelelemente 44 vor, die den hinteren Stoffhaltebügel 22 als Aufstellhebel in der geöffneten Position halten.

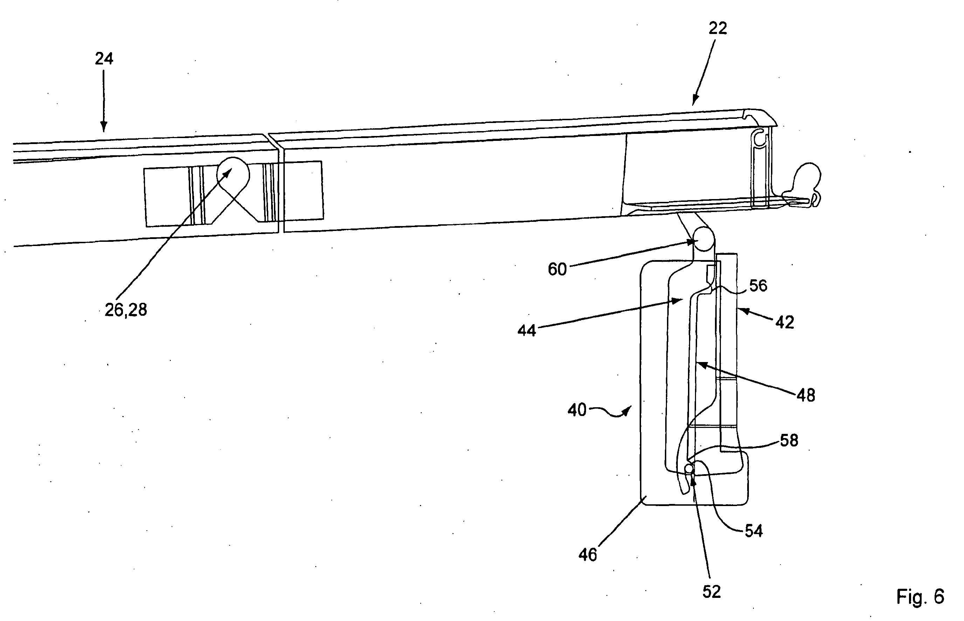

Anhand der Figuren 6 bis 10 wird nachfolgend der Verriegelungsmechanismus 40 sowie seine Arbeitsweise im Einzelnen beschrieben.

In Fig. 6 ist der Verdeckstoffhaltebügel 20, der aus dem hinteren Stoffhaltebügel 22 und dem vorderen Stoffhaltebügel 24 aufgebaut ist, in der unteren Stellung, d. h. der Schließstellung, gezeigt. Dabei sind der hintere Stoffhaltebügel 22 und der vordere Stoffhaltebügel 24 fluchtend zueinander, d. h. der hintere Stoffhaltebügel 22 ist nicht mittels des Scharniers 26 um den Drehpunkt 28 bzw. die Drehachse bezüglich des vorderen Stoffhaltebügels aufgeschwenkt. Der Verriegelungsmechanismus 40 ist in einem Gehäuse 46 untergebracht, das an der Fahrzeugkarosserie angebracht ist. In dem Gehäuse ist eine Führungskulisse 48 vorgesehen, entlang derer das Hebelelement 44 gleiten kann, wenn sich der hintere Stoffhaltebügel 22 von der Schließstellung in die Offenstellung bewegt und umgekehrt. Das Hebelelement 44 dient somit sowohl als Führung zum Führen der Schließbewegung im Verriegelungsmechanismus als auch für den hinteren Stoffhaltebügel. Um in jeder Position diese Führung sicher zu stellen, ist eine Schenkelfeder 50 vorgesehen, die das am hinteren Stoffhaltebügel 22 z. B. mittels eines Drehscharniers schwenkbar gelagerte Hebelelement 44 derart vorbelastet, dass das Hebelelement 44 immer auf die Führungskulisse gedrückt wird.

Am unteren Bereich des Hebelelements 44 ist ferner ein Verriegelungszapfen 52 vorgesehen, der die Verriegelung des Hebelelements 44 mit dem Verschlusshebel 42 sicher stellt und somit gewährleistet, dass sich der Verdeckstoffhaltebügel 20, insbesondere der hintere Stoffhaltebügel 22, nicht unbeabsichtigt aus der Schließposition bewegt. Vorzugsweise kann dazu der Verschlusshebel 42 in die Schließstellung mittels eines Vorbelastungselements, wie z. B. einer Feder, vorgespannt sein. Am Verschlusshebel 42 ist eine Aufnahmenut 54 vorgesehen, mit welcher der vom Hebelelement 44 vorspringende Verriegelungszapfen 52 verrastet. Schließlich ist im oberen Bereich der Führungskulisse 48 eine Aufnahmenut 56 vorgesehen, in welche ein entsprechender Vorsprung 58 am Hebelelement 44 einrasten kann, wenn das Hebelelement in der Aufstellposition für den hinteren Stoffhaltebügel 22 ist.

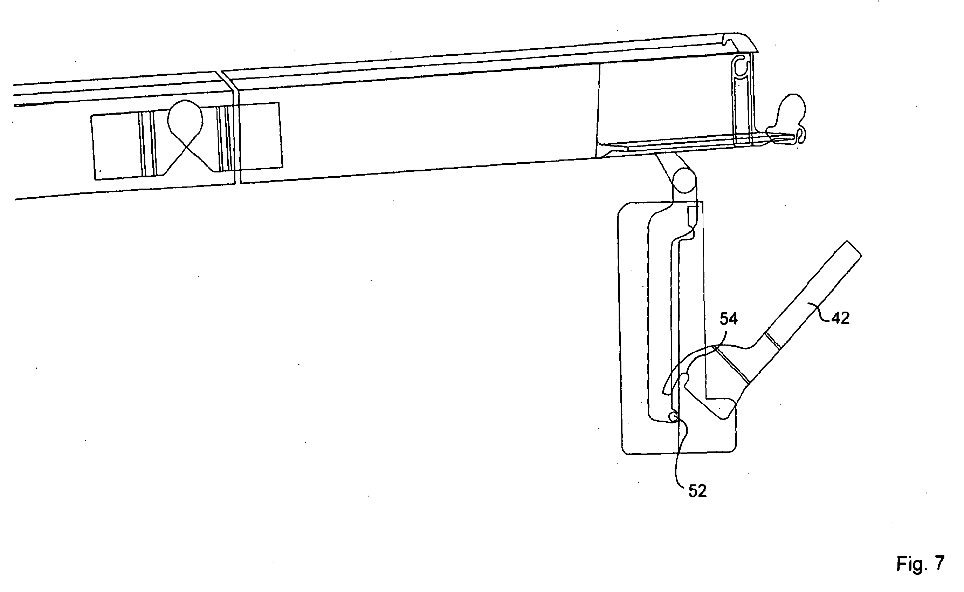

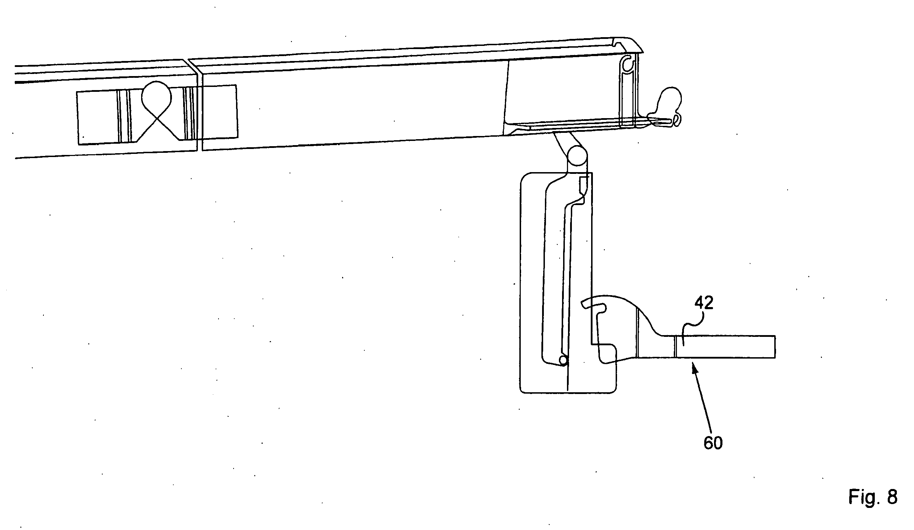

Wenn der Zugang zum Kofferraum des Fahrzeugs vergrößert werden soll und insbesondere weniger Behinderung durch den Verdeckstoffhaltebügel 20 zum Be- oder Entladen vorhanden sein soll, wird zunächst, wie es in Fig. 7 dargestellt ist, aus der in Fig. 6 gezeigten Schließstellung des Verdeckstoffhaltebügels 20 die Verriegelung zwischen dem Hebelelement 44 des Verriegelungsmechanismus 40 und dem Verschlusshebel 42 des Verriegelungsmechanismus 40 gelöst, indem der Verschlusshebel 42 manuell betätigt um eine Drehachse an seinem unteren Bereich aufgeschwenkt wird, wodurch der Verriegelungszapfen 52 aus der Aufnahmenut 54 des Verschlusshebels 42 gelangt. Vorzugsweise wird dabei, wie es in Fig. 8 gezeigt ist, der Verriegelungshebel 42 soweit aufgeschwenkt (in der gezeigten Ausführungsform um etwa 90° in Richtung im Uhrzeigersinn in der Zeichnung gemäß Fig. 8, die im Wesentlichen eine Seitenansicht auf die linke Seite des Fahrzeugs ist), dass ein Griffbereich 60 nach hinten (nach rechts in der Zeichnung) vorspringt, dass ein (in Fig. 8 nicht dargestellter) Heckdeckel 14 des Fahrzeugs in dieser Position nicht geschlossen werden kann. Dies verhindert, dass der Heckdeckel 14 versehentlich bei nicht verriegeltem Stoffhaltebügel geschlossen wird.

Da in dieser Situation der Verriegelungszapfen 52 aus der Aufnahmenut 45 am Verschlusshebel 42 gelöst ist, kann das Hebelelement 44 entlang der Führungskulisse 48 nach oben gleiten. Entweder kann dazu z. B. der hintere Stoffhaltebügel 22 manuell angehoben werden oder es sind im Scharniermechanismus 26 des Stoffhaltebügels 22 bzw. 24 Federelemente oder andere Vorspanneinrichtungen vorgesehen, welche den hinteren Stoffhaltebügel nach oben vorbelasten.

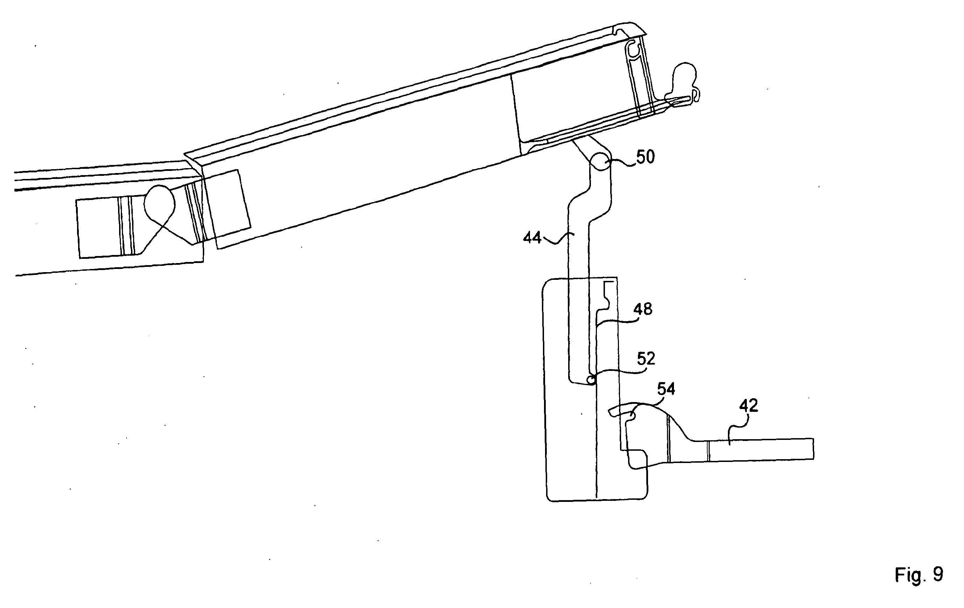

Der Hebel 44 gleitet entlang der Führungskulisse 48 wie es in Fig. 9 gezeigt ist nach oben, wobei er aufgrund der Wirkung der Schenkelfeder 50 stets gegen die Führungskulisse 48 gedrückt wird.

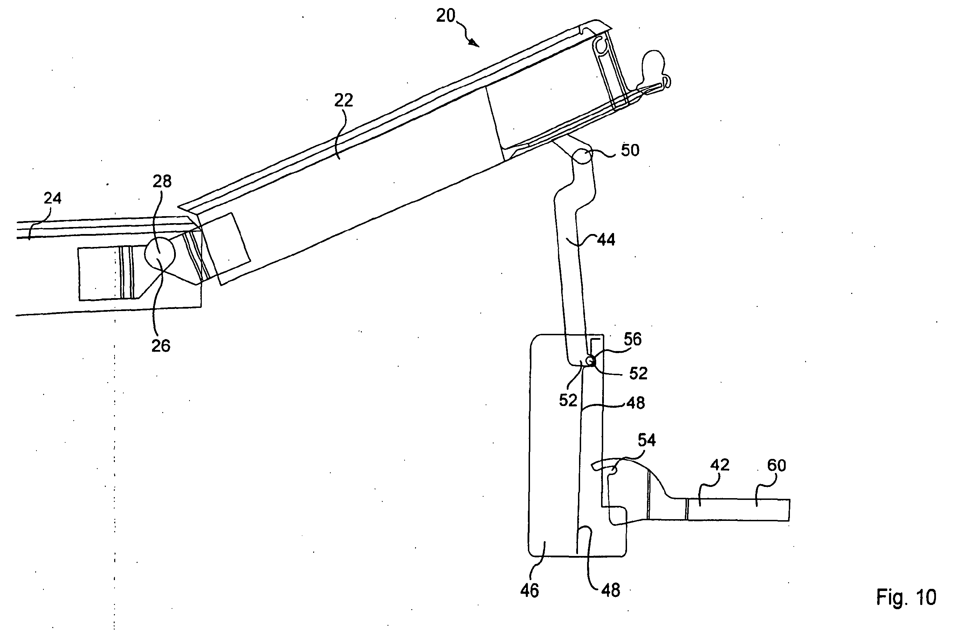

Wenn das Hebelelement 44 seine oberste Position erreicht, in welcher es als Aufstellhebel dient und die angehobene Position des hinteren Stoffhaltebügels 22 sichert und stützt, gelangt es durch die Vorbelastungswirkung der Schenkelfeder 50 in die Aufnahmenut 56 an der Führungskulisse mit seinem Vorsprung 58. Somit ist der hintere Stoffhaltebügel 22 zuverlässig vor einem Herabklappen geschützt. In dieser in Fig. 10 gezeigten Endstellung kann der Heckdeckel 14 (siehe Figuren 1, 2) des Fahrzeugs nicht geschlossen werden, da der Griffbereich 60 des Verschlusshebels 42 zu weit nach hinten vorsteht.

Wenn der hintere Stoffhaltebügel 22 wieder abgelegt werden soll, werden die Hebelelemente 44 Richtung Fahrzeuginneres gedrückt und gelangen somit mit ihren Vorsprüngen 58 aus den Aufnahmenuten 56. Manuell geführt oder beispielsweise durch die Wirkung der Schwerkraft können sie sich anschließend wieder entlang der Führungskulisse nach unten bewegen. Durch Schließen des Verschlusshebels 42 und Verrasten der Aufnahmenut 54 mit dem Verriegelungszapfen 52 wird der Verdeckstoffhaltebügel 20 sicher arretiert.

Der wesentliche Aspekt der Erfindung liegt somit darin, einen über die gesamte Bewegungsbahn geführten Hebel zum Öffnen bzw. Schließen des Verdeckstoffhaltebügels zu schaffen, und gleichzeitig sicherzustellen, dass nicht unbeabsichtigterweise beispielsweise beim Losfahren der Verdeckstoffhaltebügel unverrastet bleibt.

### BEZUGSZEICHENLISTE

- 10: Heckbereich
- 14: Heckdeckel
- 20: Verdeckstoffhaltebügel
- 22: hinterer Stoffhaltebügel
- 24: vorderer Stoffhaltebügel
- 40: Verriegelungsmechanismus
- 44: Hebelelement
- 48: Führungskulisse
- 52: Verriegelungszapfen
- 56: Aufnahmenut
- 60: Griffbereich
- 12: Stoffverdeck
- 26: Scharniermechanismus
- 28: Drehpunkt
- 42: Verschlusshebel
- 46: Gehäuse
- 50: Schenkelfeder
- 54: Aufnahmenut
- 58: Vorsprung

## Patentansprüche

1. Verriegelungsmechanismus (40) für einen zwischen einer Offen- und einer Schließstellung bewegbaren Verdeckstoffhaltebügel (20), enthaltend ein karosseriefest angebrachtes Gehäuse (46) mit einer Führungskulisse (48) für ein am Verdeckstoffhaltebügel (20) gelagertes Hebelelement (44), wobei das Hebelelement (44) zwischen der Offen- und der Schließstellung des Verdeckstoffhaltebügels (20) entlang der Führungskulisse (48) gleitet, und eine Verriegelungseinrichtung (42, 54, 54) mit der das Hebelelement (44) in der Schließstellung arretierbar ist,
**dadurch gekennzeichnet,**
**dass** die Verriegelungseinrichtung einen am Hebelelement (44) angebrachten Verriegelungszapfen (52) enthält, der mit einem zwischen der Arretier- und einer Freigabestellung bewegbaren und manuell betätigbaren Verschlusshebel (42) in der Arretierstellung verrastbar ist; und
**dass** das Hebelelement (44) mittels einer Vorspanneinrichtung (50) am Verdeckstoffhaltebügel gelagert ist, so dass das Hebelelement (44) auf seinem gesamten Bewegungsweg gegen die Führungskulisse (48) gedrückt wird.

2. Verriegelungsmechanismus (40) nach Anspruch 1,
**dadurch gekennzeichnet,**
**dass** in der Offenstellung eine Raststellung (56) für das Hebelelement (44) an der Führungskulisse (48) vorgesehen ist.

3. Verdecksystem mit einem Verdeckstoffhaltebügel (20) und einem Verriegelungsmechanismus (40) nach einem der vorhergehenden Ansprüche.

4. Verdecksystem nach Anspruch 3,
**dadurch gekennzeichnet,**
**dass** der Verdeckstoffhaltebügel (20) einen vorderen Stoffhaltebügel (24) und einen hinteren Stoffhaltebügel (22) enthält, die relativ zueinander schwenkbar sind.

5. Verdecksystem nach Anspruch 4,
**dadurch gekennzeichnet,**
**dass** der hintere Stoffhaltebügel (22) zwischen der Offen- und der Schließstellung bewegbar ist und der vordere Stoffhaltebügel (24) karosseriefest ist.

6. Verdecksystem nach einem der Ansprüche 4 oder 5,
**dadurch gekennzeichnet,**
**dass** der vordere und der hintere Stoffhaltebügel (22, 24) in der Schließstellung zueinander fluchtend sind und der hintere Stoffhaltebügel (22) relativ zu dem vorderen Stoffhaltebügel (24) in die Offenstellung mittels eines zwischen dem vorderen und dem hinteren Stoffhaltebügel vorgesehenen Scharniers (26) schwenkbar ist.

7. Stoffverdeck (12) für ein Cabrioletfahrzeug mit einem Verdecksystem (40, 20) nach einem der Ansprüche 3 bis 6.

8. Stoffverdeck (12) nach Anspruch 7 mit einem Verriegelungsmechanismus (40) nach einem der Ansprüche 1 oder 2,
**dadurch gekennzeichnet,**
**dass** der Verschlusshebel (42) in der Freigabestellung eine Position einnimmt, die ein Schließen einer Heckklappe (14) des Fahrzeugs nicht erlaubt.

## Claims

1. A locking mechanism (40) for a roof cover holding bracket (20) which is movable between open and closed positions, said locking mechanism (40) including a housing (46), which is fixed to a vehicle body and comprises a guiding slot (48) for a lever element (44) supported on the roof cover holding bracket (20), said lever element (44) sliding along the guiding slot (48) between the open and closed positions of the roof cover holding bracket (20), and a locking device (42, 54, 54) by which the lever element (44) can be arrested in the closed position,
**characterised in that**
the locking device includes a locking pin (52) mounted on the lever element (44), which locking pin (52) can be arrested in the closed position by a locking lever (42) which is movable between the arresting position and a release position and can be actuated manually, and **in that** the lever element (44) is supported on the roof cover holding bracket by means of a pre-tensioning device (50) so that the lever element (44) is pressed against the guiding slot (48) over its entire length of movement.

2. The locking mechanism (40) according to claim 1, **characterised in that** a latched position (56) is provided for the lever element (44) on the guiding slot (48) in the open position.

3. A hood system comprising a roof cover holding bracket (20) and a locking mechanism (40) according to any one of the preceding claims.

4. The hood system according to claim 3, **characterised in that** the roof cover holding bracket (20) comprises a front cover holding bracket (24) and a rear cover holding bracket (22), both of which are able to pivot with respect to each other.

5. The hood system according to claim 4, **characterised in that** the rear cover holding bracket (22) is movable between the open and closed positions and the front cover holding bracket (24) is fixed to the vehicle body.

6. The hood system according to any one of claims 4 or 5, **characterised in that** the front and rear cover holding brackets (22, 24) are aligned with each other in the closed position and the rear cover holding bracket (22) can be pivoted, with respect to the front cover holding bracket (24), into the open position by means of a hinge (26) provided between the front and rear cover holding brackets.

7. A hood (12) for a convertible vehicle comprising a hood system (40, 20) according to any one of claims 3 to 6.

8. The hood (12) according to claim 7, comprising a locking mechanism (40) according to any one of claims 1 or 2, **characterised in that**, in the release position, the locking lever (42) assumes a position which does not allow the closing of a tailgate (14) of the vehicle.

## Revendications

1. Mécanisme de verrouillage (40) pour un étrier de retenue de capote (20) qui est déplaçable entre une position d'ouverture et une position de fermeture, ledit mécanisme de verrouillage (40) présentant un boîtier (46) monté fixe sur la carrosserie et comprenant une coulisse de guidage (48) pour un élément de levier (44) prenant appui sur l'étrier de retenue de capote (20), ledit élément de levier (44) coulissant le long de la coulisse de guidage (48) entre lesdites positions d'ouverture et de fermeture de l'étrier de retenue de capote (20), et un dispositif de verrouillage (42, 54, 54) permettant d'arrêter l'élément de levier (44) dans la position de fermeture,
**caractérisé en ce que**
le dispositif de verrouillage présente un ergot de verrouillage (52) monté sur l'élément de levier (44), ledit ergot de verrouillage (52) pouvant être bloqué par encliquetage dans la position de blocage par un levier de verrouillage (42) qui est déplaçable entre la position de blocage et une position de déblocage et peut être actionné à main, et **en ce que** l'élément de levier (44) est supporté sur l'étrier de retenue de capote au moyen d'un dispositif de précontrainte (50) de manière à ce que l'élément de levier (44) soit pressé contre la coulisse de guidage (48) sur tout son chemin de déplacement.

2. Mécanisme de verrouillage (40) selon la revendication 1, **caractérisé en ce que** l'on prévoit, dans la position d'ouverture, une position d'encliquetage (56) pour l'élément de levier (44) sur la coulisse de guidage (48).

3. Système de capote comprenant un étrier de retenue de capote (20) et un mécanisme de verrouillage (40) selon l'une quelconque des revendications précédentes.

4. Système de capote selon la revendication 3, **caractérisé en ce que** l'étrier de retenue de capote (20) comprend un étrier de retenue avant (24) et un étrier de retenue arrière (22) qui peuvent basculer l'un par rapport à l'autre.

5. Système de capote selon la revendication 4, **caractérisé en ce que** l'étrier de retenue arrière (22) est déplaçable entre les positions d'ouverture et de fermeture et l'étrier de retenue avant (24) est monté fixe sur la carrosserie.

6. Système de capote selon l'une quelconque des revendications 4 ou 5, **caractérisé en ce que** les étriers de retenue avant et arrière (22, 24) sont alignés l'un par rapport à l'autre dans la position de fermeture et l'étrier de retenue arrière (22) peut basculer, par rapport à l'étrier de retenue avant (24), vers la position d'ouverture au moyen d'une charnière (26) prévue entre les étriers de retenue avant et arrière.

7. Capote (12) pour un véhicule cabriolet comprenant un système de capote (40, 20) selon l'une quelconque des revendications 3 à 6.

8. Capote (12) selon la revendication 7, comprenant un mécanisme de verrouillage (40) selon l'une quelconque des revendications 1 ou 2, **caractérisé en ce que**, dans la position de déblocage, le levier de verrouillage (42) occupe une position qui ne permet pas la fermeture d'un hayon (14) du véhicule.
